# EUROPEAN PATENT SPECIFICATION

(11) **EP 3 381 003 B1**
(45) Date of publication and mention of the grant of the patent: **12.02.2020**
(21) Application number: 16881348.3
(22) Date of filing: 01.12.2016
(51) Int. Cl.: G06F 21/31, G06F 21/36, G06Q 20/32, H04W 12/06, G06Q 20/40, G07F 7/08, G07F 7/10, G06F 21/83, G09C 5/00, H04L 9/32

(54) **SYSTEM FOR AND METHOD OF AUTHENTICATING A USER ON A DEVICE**
SYSTEM UND VERFAHREN ZUR AUTHENTIFIZIERUNG EINES BENUTZERS AUF EINER VORRICHTUNG
SYSTÈME ET PROCÉDÉ D'AUTHENTIFICATION D'UN UTILISATEUR SUR UN DISPOSITIF

(30) Priority: 28.12.2015 US 201562271428 P
(43) Date of publication of application: 03.10.2018
(73) Proprietor: Mobeewave Inc., Montreal, Québec H3C 2N5 (CA)
(72) Inventor: OLLIVIER, Julien, Montreal, Québec H2T 2H7 (CA); ALIMI, Vincent, Verdun, Québec H3E 1E7 (CA); FONTAINE, Sébastien, Montreal, Québec H2M 2L3 (CA)
(74) Representative: Therias, Philippe
(86) International application number: PCT/IB2016/057249
(87) International publication number: WO 2017/115174

(56) References cited:
- EP-A1- 2 775 421
- WO-A2-2014/132193
- US-A1- 2012 047 564
- US-A1- 2013 301 830
- US-A1- 2015 154 414
- US-A1- 2015 154 414
- ANDREA FORTE ET AL: "EyeDecrypt -- Private Interactions in Plain Sight", INTERNATIONAL ASSOCIATION FOR CRYPTOLOGIC RESEARCH,, vol. 20140625:194801, 25 June 2014 (2014-06-25), pages 1-19, XP061016074, [retrieved on 2014-06-25]

## Description

### CROSS-REFERENCE

The present application claims convention priority to U.S. Provisional Patent Application No. 62/271,428, filed December 28, 2015, entitled "SYSTEM FOR AND METHOD OF AUTHENTICATING A USER ON DEVICE.

### FIELD

The present technology relates to systems and methods for authenticating a user on mobile devices. The system and method may be used in the context of conducting transactions on a mobile device, more particularly secured financial transactions.

### BACKGROUND

This section is intended to introduce the reader to various aspects of art that may be related to various aspects of the present disclosure, which are described and/or claimed below. This discussion is believed to be helpful in providing the reader with background information to facilitate a better understanding of the various aspects of the present technology. Accordingly, it should be understood that these statements are to be read in this light, and not as admissions of prior art.

Payment terminals, also known as point of sale (POS) terminals, are well established in the art. They are used for electronic funds transfers between retailers and customers where transactions are conducted by swiping, inserting or tapping payment cards with a POS terminal. Some POS terminals support only magnetic stripe technology (swiping), while other terminals additionally or exclusively support so-called chip cards or smart cards, which comprise a microprocessor chip embedded in the card. This chip provides a high level of security against both logical and physical attacks aiming to clone the card or compromise sensitive information stored within it.

In order to ensure security during the financial transactions involving chip cards, security standards such as the Europay, MasterCard, and Visa (EMV) transaction standard have been developed and used to certify both the payment terminals and the payment cards. However, due to various factors, including the technical complexity required to meet the security standards, payment terminals that are used to conduct secured financial transactions are usually devices that are cumbersome, costly and solely dedicated to the conduct of financial transactions.

Mobile payment systems and digital wallets such as Apple Pay®, Android Pay® and Samsung Pay® allow customers to store their credit card information on their mobile devices and use their devices to make payments via near field communication (NFC) or radio-frequency identification (RFID) on adapted contactless point of sale terminals.

However, mobile devices may not have the required security standards to be used as payment terminals, are not accepted everywhere and thus do not completely eliminate the need for dedicated payment terminals.

As a response to at least some of the shortcomings of the technologies detailed above, approaches have been developed to allow a general-purpose mobile device, such as, but not limited to, a smart phone, to be turned into a payment terminal. Such approaches include the method, device, add-on and secure element of U.S. Patent Publication 2014/0324698 wherein a method and a device for conducting a secured financial transaction are provided, the device comprising a CPU and a secure element, wherein a purchase amount to be debited from a financial account is acquired, data relating to the financial account is acquired, and a transaction authorization from a financial institution related to the financial transaction is acquired, with the authorization based, at least partially, on data processed solely by the secure element independent from data processed by the CPU.

In addition, methods and systems have been developed to address the need for securely authenticating a user, through his/her Personal Identification Number (PIN), when conducting a financial transaction using a payment card at a dedicated point of sale terminal. Such methods and systems, whereby the payment terminal acts as a PIN Entry Device (PED), aim to meet the required level of security specified in international standards such as ISO 9564, Payment Card Industry (PCI) - PIN Transaction Security (PTS), and other applicable PCI standards, which have been developed for PIN security and management in retail banking, the standards comprising requirements for PIN length, selection, issuance, delivery, encryption algorithms, storage, transmission, secure entry and requirements for offline PIN handling in ATM and POS systems.

US 2013/301830 A1 discloses a system and method of secure entry handling of passwords and Personal Identification Numbers (PINs) for secure payment via mobile devices.

US 2015/154414 A1 discloses a computer-implemented authentication method comprising the step of enabling a user to input an identifier (e.g., a PIN) into an electronic device having a screen and a keypad operable within a keypad zone of the screen.

EP 2 775 421 A1 discloses a point-of-sale (POS) terminal for entering a PIN to enable a financial transaction comprising a touch screen for displaying information and receiving user inputs.

Andrea Forte et Al.: "EyeDecrypt - Private Interactions in Plain Sight". International Association for Cryptologic Research, vol. 20140625:194801, 25 June 2014 discloses a technology for privacy-preserving human-computer interaction.

Other approaches generally focus on bulky payment terminals, where a scrambled PIN pad image is received by the device, is superimposed on top of an underlying keypad, such that a user enters an encoded version of his PIN, and the encoded version is then preferably sent to a remote server and decoded to process the PIN. However, such methods may not fully comply with financial security standards, may not allow offline processing and/or may not be enabled on a mobile device to be used as payment terminal.

There is therefore a need in the art for a method and system for obtaining a personal identification code (PIC) on a mobile device while providing a certain level of security, minimizing added cost and/or disruption to the design (e.g., by limiting and/or eliminating the need for hardware components not already present on the device for other reasons). Such level of security may be, but not necessarily, selected so as to be compliant with certain security standards.

### SUMMARY

Embodiments of the present technology have been developed based on inventors' appreciation that known approaches for secured PIN entry may, in some instances, not be relied upon to conduct secured financial transactions compliant with financial industry standards on mobile devices. Improvements are therefore desirable, in particular improvements aimed at assuring that a PIC is stored either in a secure environment or in encrypted form in a non-secure environment and improvements aimed at reducing risks of interception of the PIC by malevolent software.

The present technology arises from an observation made by the inventor(s) that while the usage of mobiles devices has been democratized, the majority of financial transactions are still made using bulky payment terminals, because of the lack of secure methods for conducting PIC entry on a mobile device. However, in light of the latest developments in the art, inventor(s) have devised a method and a system for conducting secured financial transactions on a mobile device while providing a certain level of security.

The object of the present technology is solved by a method for operating a device according to claim 1 and a computer-implemented system according to claim 12. Preferred embodiments are presented in the dependent claims.

In general, another aspect of the subject matter described in the specification can be embodied in a method and system that further comprises, prior to transmitting, to the secure element, the correspondence table, encrypting the correspondence table.

In general, another aspect of the subject matter described in the specification can be embodied in a method and system that further comprises, after encrypting the correspondence table, decrypting, by the secure element, the correspondence table.

In general, another aspect of the subject matter described in the specification can be embodied in a method and system wherein an unencrypted version of the PIC remains inaccessible to any one of the processor, the display controller, the touch screen controller and the isolated secured area of the processor, at any given time.

In general, another aspect of the subject matter described in the specification can be embodied in a method and system wherein an unencrypted version of the PIC is solely accessible by the secure element.

In general, another aspect of the subject matter described in the specification can be embodied in a method and system wherein the isolated secured area only accesses an encrypted version of the PIC.

In general, another aspect of the subject matter described in the specification can be embodied in a method and system wherein the touch screen controller does not have access to the correspondence table nor to the visual representation of the scrambled keypad, at any given time.

In general, another aspect of the subject matter described in the specification can be embodied in a method and system wherein the secure element is securely connected to the processor.

In general, another aspect of the subject matter described in the specification can be embodied in a method and system wherein the isolated secured area of the processor comprises a trusted user interface.

In general, another aspect of the subject matter described in the specification can be embodied in a method and system wherein the touch screen controller is securely connected to the trusted user interface.

In general, another aspect of the subject matter described in the specification can be embodied in a method and system wherein the method further comprises re-scrambling at least a portion of the visual representation of the scrambled keypad by generating a correspondence table after a keying event occurs.

In general, another aspect of the subject matter described in the specification can be embodied in a method and system wherein multiple correspondence tables, hot spots layouts and visual representations of scrambled keypads are generated before a touch event occurs.

In general, another aspect of the subject matter described in the specification can be embodied in a method and system wherein the visual representation of the scrambled keypad is at least one of an image, a video stream and a visual representation of a keypad.

In general, another aspect of the subject matter described in the specification can be embodied in a method and system wherein the method further comprises causing to display, by the display controller, a security indicator previously associated with the user.

In general, another aspect of the subject matter described in the specification can be embodied in a method and system wherein the security indicator previously associated with the user is stored in the isolated secure area of the processor.

In general, another aspect of the subject matter described in the specification can be embodied in a method and system that further comprises, encrypting the reconstituted PIC by the secure element; and transmitting the encrypted reconstituted PIC to the processor.

In general, another aspect of the subject matter described in the specification can be embodied in a method and system wherein the secure element is at least one of a hardware element operatively connected to the processor, a software component run by the processor, the isolated secured area and a portion of the isolated secured area.

In general, another aspect of the subject matter described in the specification can be embodied in a method and system wherein generating the correspondence table, the hot spots layout and the visual representation of the scrambled keypad is executed by one of the isolated secured area of the processor and the secure element.

In general, another aspect of the subject matter described in the specification can be embodied in a method and system wherein reconstituting the PIC associated with the user comprises mapping the keying events on the correspondence table.

In general, another aspect of the subject matter described in the specification can be embodied as a method and system on a mobile device for conducting secured financial transactions between at least two mobile devices ("peer-to-peer banking").

In other aspects, various implementations of the present technology provide a non-transitory computer-readable medium storing program instructions for conducting secured PIC entry on a device, the program instructions being executable by a processor of a computer-based system to carry out one or more of the above-recited methods.

In other aspects, various implementations of the present technology provide a computer-based system, such as, for example, but without being limitative, a device comprising at least one processor and a memory storing program instructions for conducting secured PIC entry on a device, the program instructions being executable by one or more processors of the computer-based system to carry out one or more of the above-recited methods.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

These and other features, aspects and advantages of the present technology will become better understood with regard to the following description, appended claims and accompanying drawings where:
FIG. 1 is an illustration of the components and features of the device in accordance with an embodiment of the present technology;
FIG 2a is an illustration of a possible correspondence table in accordance with an embodiment of the present technology;
FIG 2b is an illustration of a possible hot spots layout in accordance with an embodiment of the present technology;
FIG 2c is an illustration of a possible arrangement of a scrambled keypad in accordance with an embodiment of the present technology;
FIG. 3 is an illustration of a possible personal identification code (PIC) authentication screen in accordance with an embodiment of the present technology;
FIG. 4 is a flowchart representation of a communication flow between a processor, a display controller, a touch screen controller and a secure element in accordance with an embodiment of the present technology; and
FIG. 5 is an illustration of a method carried out in accordance with non-limiting embodiments of the present technology.

### DETAILED DESCRIPTION OF THE DRAWINGS

Various exemplary embodiments of the described technology will be described more fully hereinafter with reference to the accompanying drawings, in which exemplary embodiments are shown. The present inventive concept may, however, be embodied in many different forms and should not be construed as limited to the exemplary embodiments set forth herein. Rather, these exemplary embodiments are provided so that the disclosure will be thorough and complete, and will fully convey the scope of the present inventive concept to those skilled in the art. In the drawings, the sizes and relative sizes of layers and regions may be exaggerated for clarity. Like numerals refer to like elements throughout.

It will be understood that, although the terms first, second, third etc. may be used herein to describe various elements, these elements should not be limited by these terms. These terms are used to distinguish one element from another. Thus, a first element discussed below could be termed a second element without departing from the teachings of the present inventive concept. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is only intended to describe particular exemplary embodiments and is not intended to be limiting of the present inventive concept. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Throughout the present disclosure, reference is made to secure transactions (for example, but without being limitative, contact and contactless transactions), secure elements (for example, but without being limitative, chipset, secured chipset, hardware embedding secured component, software embedding secured component, or firmware embedding secured component) and security standards. Examples of security standards include, without being limitative, certification standards from Europay, MasterCard, and Visa (EMV), EMVCo, MasterCard®, Visa®, American Express®, JCB®, Discover® and from the PCI SSC (Payment Card Industry Security Standards Council), founded by MasterCard®, Visa®, American Express®, Discover® and JCB® and dealing specifically with the definition of security standards for financial transactions. Reference to secure transactions, secure elements, and security standards is made for the purpose of illustration and is intended to be exemplary of the present technology and not limiting of the scope thereof.

Processor: in the context of this technology, the definition of a processor includes a system on chip (SoC), an integrated circuit that integrates components of a computer in a single chip. A typical SoC may include but is not limited to one or more general-purpose microprocessors or Central Processing Units (CPUs), co-processors such as a digital signal processor (DSP), a Graphics Processing Unit (GPU), and multimedia coprocessors such as MPEG and JPEG encoders and decoders. The SoC may also include modems for various wireless communications interfaces including cellular (e.g. LTE/4G, 3G, GSM, CDMA, etc.), Bluetooth, and Wireless Fidelity (Wi-Fi) (IEEE 802.11). The SoC may include memory controllers for interfacing with on-die or external DRAM memory chips, and on-die memory blocks including a selection of ROM, SRAM, DRAM, EEPROM and flash memory. The SoC may additionally include timing sources, peripherals including counter-timers, real-time timers and power-on reset generators, debug, JTAG and Design For Test (DFT) interfaces, external interfaces, analog interfaces, voltage regulators, power management circuits, etc. The SoC may also include connectivity components such as simple buses or on-chip networks following the ARM Advanced Microcontroller Bus Architecture (AMBA) specification connecting these blocks together as known in the art. Some blocksmay be packaged separately and stacked on the top of the SoC, a design known in the art as Package-on-package (PoP). Alternatively some blocks may be comprised in distinct integrated circuits (or dies) but packaged together, a design known in the art as a System in Package (SiP).

Isolated secured area of the processor: a processing entity characterized by specific hardware and/or software components subject to a certification ensuring a specific level of security according to specific security standards. The isolated secured area ensures that sensitive data is stored, processed and protected in a secured and trusted environment of the processor while maintaining high processing speeds and large amounts of accessible memory. The isolated secured area may offer isolated execution, secure storage, remote attestation, secure provisioning, trusted boot and trusted path. The isolated secured area allows the processor to operate in two logical modes: normal world or secure world. The normal world is run by the non-secure area of the processor and may comprise the non-secure Rich Operating System (Rich OS) and the software components and applications that run on top of the Rich OS. The normal world is excluded from accessing resources that are provisioned for exclusive use in the secure world. The secure world is run by the isolated secured area, which is the only entity to have access to resources provisioned for use exclusively in the secured area, such as certain delineated ranges of ROM or RAM memory, processor or co-processor configuration registers, and certain peripherals such as display controllers or touch screen controllers, and their associated configuration registers. Some of the resources provisioned for the exclusive use of the isolated secure area may be on the same die or package as the SoC, while others may be contained in a different die or package. Some of the resources may be dynamically provisioned for the exclusive use of the isolated secure area at certain times, while at other times they may be available for use by the normal world. The isolated secured area only runs authorized and trusted applications and provides security against logical attacks generated in the Rich OS environment, attacks aiming to compromise boot firmware, attacks that exploit debug and test interfaces, and other non-invasive attacks. Non-limiting examples of an isolated secured area of the processor include Trusted Execution Environment (TEE), Intel Trusted Execution Technology (TXT), the Trusted Platform Module (TPM), the Hengzhi chip and the IBM Embedded Security Subsystem (ESS) chip. In some embodiments, the isolated secured area of the processor is designed so as to not be accessed, even by a human administrator. In some embodiments, the isolated secured area may be implemented partially or completely via a dedicated hardware element such as, but without being limited thereto, a secure element as defined in the paragraph below. Other variations of the isolated secured area may also be envisioned by the person skilled in the art of the present technology without departing from the scope of the present technology.

Secure element: a processing entity characterized by specific hardware and/or software components subject to a certification ensuring a specific level of security according to specific security standards. From a hardware perspective, a secure element includes the usual components found in a computing entity: at least one microprocessor (e.g. CPU), memory (e.g. ROM, RAM or FLASH memory), communication interfaces, etc. Specific hardware components may also be included to implement specific functionalities particular to a secure element. For instance, a cryptographic accelerator may be included. Also, various tamper resistance, tamper detection and/or tamper response features may be included to prevent a malicious person from extracting sensitive information from the secure element. Anti-tamper measures may comprise hardware aspects, software aspects, or a combination of hardware and software. Also, certain counter-measures to prevent side-channel attacks aiming to recover cryptographic keys or other sensitive information may be included in the secure element. Counter-measures against side-channel attacks may include hardware aspects, software aspects, or both. Also, measures to reduce EM emissions, such as shielding, may be included, to protect the secure element from eavesdropping. In the context of financial transactions, the certification of the secure element ensures that various financial entities are willing to use the secure element to store and process critical financial data, and to perform secured financial transactions using the critical financial data. In some embodiments, the secure element may be solely characterized by software components. The secure element may be, in some embodiments, implemented partially or completely as an isolated secured area of the processor, such as the isolated secured as described in the paragraph above, in which case, the secure element may be implemented, for example, but without being limitative, as a TEE, a TPM and/or a ESS. Other variations of the secure element may also be envisioned by the person skilled in the art of the present technology without departing from the scope of the present technology.

Touch screen: a touch-sensitive sensor device with an input and/or output interface usually superimposed on top of an electronic visual display of an information processing system. Touch screens usually work by detecting tactile and/or haptic contact with the touch screen display. Touch screen technologies may include, but are not limited to resistive, surface acoustic wave, capacitive, projective capacitive, infrared grid, infrared acrylic projection, optical imaging, dispersive signal technology and acoustic pulse recognition touchscreens. Touch screens may include force sensitive components to detect pressure applied to the screen. Touch screens may also include haptic feedback components. Other variations of the touch screen may also be envisioned by the person skilled in the art of the present technology without departing from the scope of the present technology.

Touch screen controller: a controller that detects analog touch signals output by the touch screen, may perform analog-to-digital conversion of the analog output, may perform signal processing steps to condition the signal and deduce the screen coordinates associated with one or more touch events. Typically, but non-limitatively, the coordinates of touch events will be output to a processor using a low-bandwidth serial interfaces including serial peripheral interface (SPI) and inter-integrated circuit (I²C) interfaces, as it is known in the art. The touch screen controller may be integrated with the display controller or any other block. Other variations of the touch screen controller may also be envisioned by the person skilled in the art of the present technology without departing from the scope of the present technology.

Display screen: an electronic visual display device with an input and/or output interface used to convey visual information the user. Display screen technologies may include, but are not limited to, Liquid Crystal Displays (LCD), displays based on Organic Light-Emitting Diode (OLED) technology, displays based on active-matrix organic light-emitting diode (AMOLED) technology.

Display screen controller: A device capable of inputting digital image data, either from a frame buffer in memory or from a standard digital interface such as MIPI or eDP, and outputting analog or digital video signals suitable for interfacing with the specific display screen technology and at an appropriate frame rate (for example, using LVDS). The display controller may be included in the same die or package as the processor SoC, or be a discrete component, or be integrated with the display screen, or a combination. The display controller may include functions for image upscaling, downscaling, rotation and blending.

Trusted User Interface (TUI): A combination of software, hardware and peripheral resources which may be reserved for the exclusive use of the isolated secure area and may be configured in such a way as to give exclusive and non-interruptible control of the display screen (or a portion thereof) and the touch sensor to the isolated secure area and to maintain the integrity and confidentiality of the displayed images and of the touch events generated by the touch sensor and controller. The TUI in a device may be subjected to a certification ensuring a specific level of security according to specific security standards. A TUI automatically detects and only allows authorized or trusted applications to access the content of a secure screen memory. In one embodiment, the TUI is one specific mode in which the device is controlled by the isolated secured area of the processor to ensure that the information displayed on the touch screen is from a trusted source and isolated from the operating system. Other variations of the TUI may also be envisioned by the person skilled in the art of the present technology without departing from the scope of the present technology.

Information / data: the terms "information" and "data" are used interchangeably, and have a similar meaning for the purpose of the present disclosure.

Security standards may comprise multiple security levels, such as, but without being limitative, Level 1, Level 2, or Level 3. As an example, but without being limitative, Level 1 may correspond to a higher level of security than Level 2 which, in turn, may correspond to a higher level of security than Level 3. For example, but without being limitative, the EMCo standard may provide examples of security levels and approval and certification standards such as terminal type approval process, security evaluation process, card type approval process, or mobile type approval process.

For example, the terminal type approval process may be a mechanism to test compliance with Europay, MasterCard, and Visa (EMV) specifications. The terminal type approval may provide a level of confidence that interoperability and consistent behavior between compliant applications may be achieved. In an example, the terminal type approval testing may be divided into two levels, Level 1 and Level 2. The Level 1 type approval process may test compliance with the electromechanical characteristics, logical interface, and transmission protocol requirements defined in the EMV specifications. The Level 2 type approval may test compliance with the debit/credit application requirements as defined in the EMV specifications. Additionally, the terminal type approval testing may include a Level 3 approval, which guarantees secure communications between an application executed on the terminal and a financial institution.

Even though the various components defined above are each associated with a definition, it should be understood that each one of the various components should not be construed as being solely limited to the specific functions and/or specifics provided in the associated definition. To the contrary, other functions and/or specifics may be added, removed or combined without departing from the scope of the present technology. In addition, functions and/or specifics may be switched from one component to another component without departing from the scope of the present technology (e.g., a function associated with the touch screen may be switched to the touch screen controller). Some of the various components may also be partially or completely merged together without departing from the scope of the present technology (e.g., the touch screen and the touch screen controller may be merged together to define a single component, or the display controller and the processor may be merged together to define a single component).

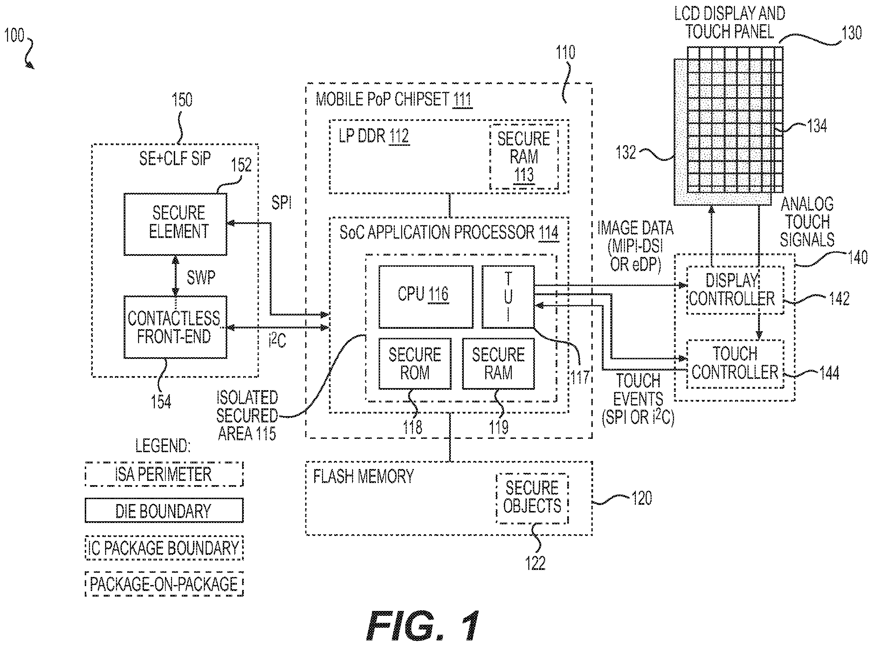

FIG. 1 is a block diagram illustrating various exemplary components and features of an illustrative device 100 in accordance with one embodiment of the present technology.

In accordance with at least one embodiment described herein, a method and a system for conducting a secured financial transaction on a device are provided. The device comprises a processor, the processor comprises an isolated secured area, a display screen operatively connected to a display screen controller, the display screen controller operatively connected to the processor, a touch screen operatively connected to a touch screen controller, the touch screen controller operatively connected to the processor and a secure element associated with the processor.

In some embodiments, the device may be implemented as any device comprising the components needed to carry a method and a system detailed hereinafter. In some embodiments, the device may include a smartphone, a phablet, a smartwatch and/or a wearable computer, a PDA, a tablet and a computer. In some alternative embodiments, the device may also be embedded in or on objects not solely dedicated to computing and/or information processing functions, such as, but no limited to, a vehicle, a piece of furniture, an appliance, etc.

In the illustrated embodiment, the device 100 comprises a mobile package on package (PoP) chipset 110, a projective capacitive touch panel superimposed on a LCD display 130, a display controller and a touch screen controller 140, a secure element and a contactless front-end 150 and a flash memory 120.

In a non-limiting embodiment, the mobile PoP chipset 110 comprises a Low Power Double Data Rate (LP DDR) memory 112 stacked with a SoC application processor 114. The SoC application processor 114 comprises an isolated secured area (ISA) 115, a central processing unit (CPU) 116, a trusted user interface (TUI) 117, a secure read-only memory (ROM) 118 and a secure random access memory (RAM) 119. The LP DDR 112 comprises a secure RAM memory 113. The mobile PoP chipset 110 is connected to a flash memory 120 comprising secure objects 122.

In some embodiments of the present technology, the device may execute a non-secure operating system (OS). Examples of an OS running on the SoC application processor 114 include, but are not limited to, a version of iOS®, or a derivative thereof, available from Apple Inc.; a version of Android OS®, or a derivative thereof, available from Google Inc.; a version of PlayBook OS®, or a derivative thereof, available from RIM Inc. It is understood that other proprietary OSs or custom made OSs may be equally used without departing from the scope of the present technology.

In some embodiments of the present technology, the isolated secure area may execute a secure OS, which is separate, distinct and isolated from the OS being executed by the non-secure area of the processor. The secure OS typically has higher privilege levels than the non-secure OS, which allow it, for example, to exclude the non-secure OS from accessing sensitive resources. The secure OS may be entirely different from the non-secure OS (e.g. a secure microkernel), or may be substantially the same as the non-secure OS (e.g. a modified version of Android OS®).

The touch screen controller 144 is connected to the trusted user interface 116 by way of a serial peripheral interface (SPI) or inter-integrated circuit (i²C) interface, serial interfaces known in the art for attaching integrated circuits (ICs) to processors and microcontrollers. The touch screen controller 144 is connected to the trusted user interface 116 and to the display controller 142 with a MIPI display serial interface (MIPI-DSI) or an embedded display port (eDP) connection, communication protocols and serial buses between host and device, as it would be recognized by someone skilled in the art. The projective capacitive touch panel 134 is superimposed on the LCD display 132. The secure element 152 is connected to the SoC application processor 114 by way of a SPI bus interface. The contactless front end 140 is connected to the SoC application processor 114 with an i²C interface. In some embodiments, the touch screen controller 144 may be securely connected to the TUI 117, such that every transmission of data between touch screen controller 144 and TUI 117 is encrypted. In some embodiments, the secure element 152 is securely connected to the contactless front-end 154 and to the SoC application processor 114, such that every transmission of data between secure element 152, contactless front-end 152 and SoC application processor is encrypted. Such examples of devices and connections are only presented for an illustrative purpose, and other variations may be possible, as would be recognized by a person skilled in the art of the present technology.

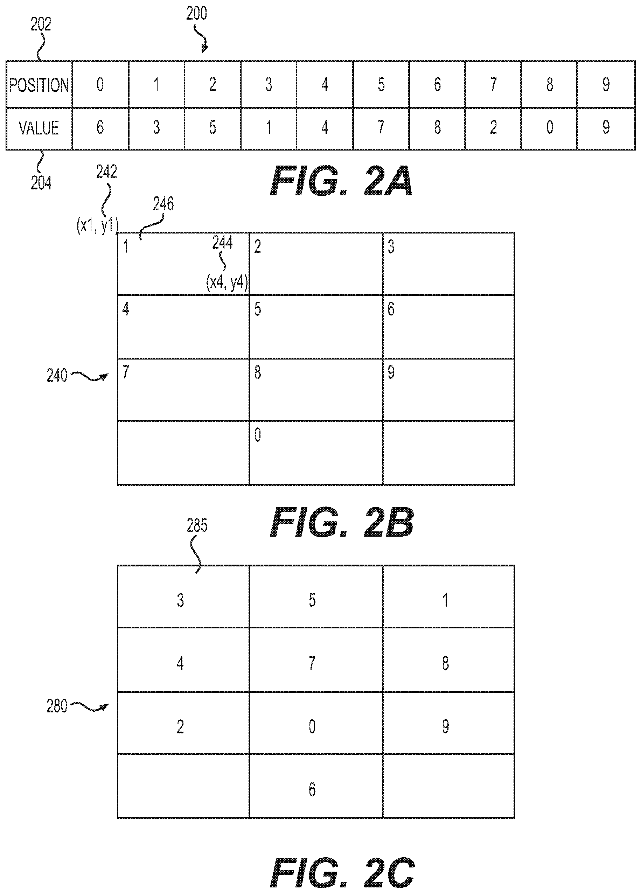

Turning now to FIG. 2a, a non-limiting example of a correspondence table 200 is illustrated. In some embodiments, the correspondence table 200 may be an array. Each column of the correspondence table 200 may represent a position 202 on a keypad. Associated with each position 202 is a value 204. In some embodiments, a pseudorandom number generator (PRNG) may generate each value 204, such that each value has only one occurrence in the correspondence table 200, and each value is equally likely to appear in a given position. The correspondence table 200 may then be used to generate a scrambled keypad, such as scrambled keypad of FIG 2c. Other embodiments of the correspondence table may be possible, where values are replaced by letters or symbols, as it would be recognized by someone skilled in the art. In some embodiments, the correspondence table, once generated, may be sent to the secure element for subsequent reconstitution of a PIC.

Turning now to FIG. 2b, a non-limiting example of a graphical representation of a hot spots layout 240 is illustrated. The hot spots layout 240 corresponds to the geometry and the position of each key that may be pressed by a user on a touch screen. As a non-limiting example, the hot spots layout may define that the key 245, representing position 1 on the keypad, corresponds to every touch event whose coordinate lies within the rectangle defined by the coordinates 242 and 244. The hot spots layout 240 may be sent to a touch screen controller, and the touch screen controller may process a touch event according to the hot spots layout to output a keying event.

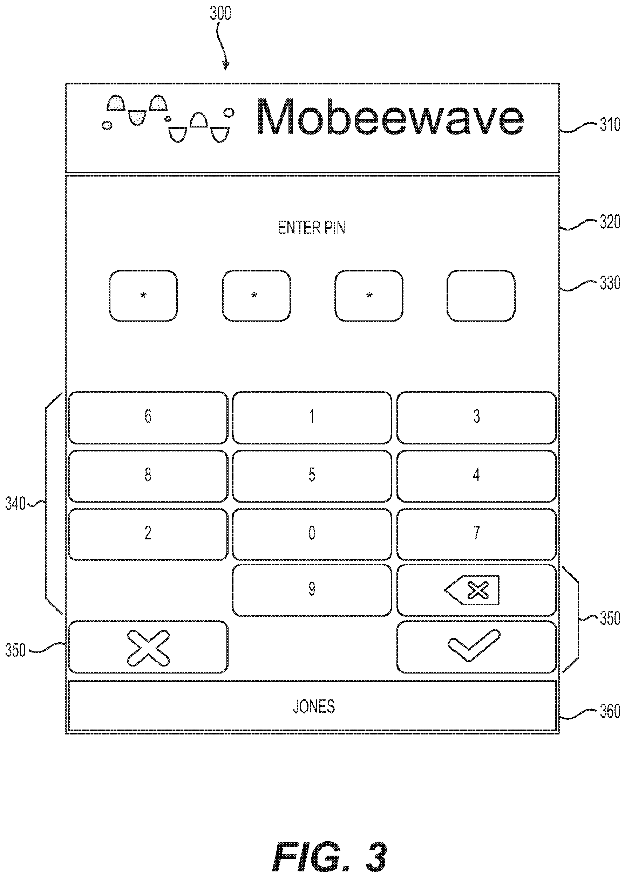

Turning now to FIG. 2c, a non-limiting example of a visual representation of a scrambled keypad 280 is illustrated. The visual representation of a scrambled keypad 280 with values 285 may be generated by combining the information in a correspondence table 220 and a hot spots layout 240. In other embodiments, the scrambled keypad 280 may be generated by other types of correspondence tables and hot spots layouts. It is understood that the scrambled keypad 280 is only presented as an illustrative purpose, and other forms and arrangements of a scrambled keypad may be possible, as it would be recognized by someone skilled in the art. In some embodiments, the scrambled keypad 280 may be part of a PIC entry screen such as PIC entry screen of FIG. 3, and transmitted to be displayed on a display screen by a display controller.

A scrambled keypad provides a certain level of security for PIC entry, as it makes the process of direct observation of the PIC by a malevolent person or software more bothersome. Even if a malevolent person or software has access to the touch event output or keying events, it is impossible to reconstitute the PIC without knowing the correspondence table of the scrambled keypad. A re-scrambling of the keypad after each touch event may add an additional level of security.

Turning now to FIG. 3, a non-limitative embodiment of a personal identification code (PIC) entry screen for conducting a secured transaction is illustrated. In an embodiment of the present technology, the PIC is a personal identification number (PIN). The PIN entry screen may be part of an application or software run by the CPU and/or the isolated secured area of the processor of the device. In other embodiments, the PIN entry screen may be part of but is not limited to a standalone application, an extension of another application, or may be called by a procedure call from another application when a secure PIN entry is needed. The PIN entry screen 300 may be displayed on a part of the screen or the whole screen, and may run parallel to another application appearing on a different part of the screen. In this embodiment, a logo 310 is displayed on the top of the PIN entry screen 300. A text prompting the user to enter her/his PIN 320 is displayed under the logo 310. Data entry field 330, with asterisks corresponding to keys pressed by the user on the touch screen is displayed under prompting text 320. A scrambled keypad 340 is displayed under data entry field 330, with correct, confirm and validate buttons 350. A security indicator 360 associated with the user is displayed on the bottom of the screen. The security indicator 360, comprises a secret shared between the user and a trusted entity, such as but not limited to a financial institution holding his account. The shared secret may be an image, a catchphrase or any other secret information recognized by the user, and is displayed so that the user may be confident that he is entering his PIC on a trusted application securely connected to a trusted server of his/her financial institution. The security indicator 360 may be a video stream where each single frame contains a part of the security indicator, such as a malevolent person or software may not be able to reproduce the security indicator from a single photograph or screenshot. In some embodiments, the scrambled keypad may be composed of different symbols and/or numbers and/or letters. In alternative embodiments, the security indicator may be visual and/or auditory and/or olfactory and/or tactile, provided that the device has the required technology to support such embodiments. This example is only for illustrative purposes, and many versions of a PIC entry screen may be defined, as would be appreciated by a person skilled in the art of the present technology.

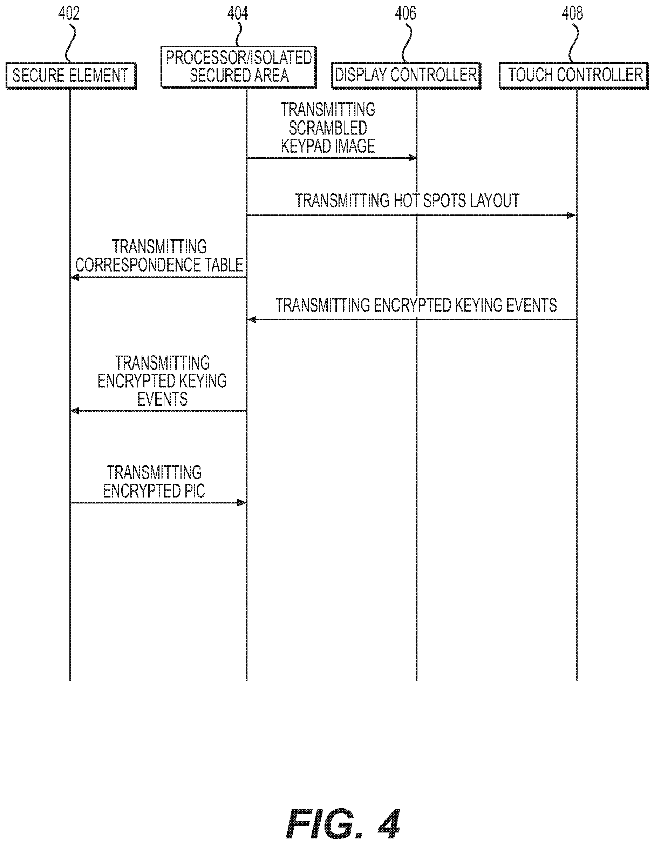

FIG. 4 is a flowchart representation of a communication flow between an isolated secured area of the SoC application processor 404, a display controller 406, a touch screen controller 408 and a secure element 402 in accordance with an embodiment of the method and systems of the present technology. In other embodiments of the current technology, display controller 406 and touch screen controller 408 may be merged in a single component. In other embodiments, the role of the secure element may be played by a secure server in the cloud. In this embodiment, the isolated secured area of the SoC application processor 404 generates a correspondence table, an image of a scrambled keypad and coordinates to delimit each key in the scrambled keypad, also known as a hot spots layout in the art. The SoC application processor 404 transmits the scrambled keypad image to the display controller 406. The SoC application processor 404 transmits the hot spots layout to the touch screen controller 408. The SoC application processor 404 encrypts and transmits the correspondence table to the secure element 402.

In other embodiments, a TUI controlled by the isolated secured area of the SoC application processor 404 may generate a correspondence table, a hot spots layout, a scrambled keypad image and transmit the scrambled keypad image to the display controller 406, the hot spots layout to the touch screen controller 408 and the correspondence table to the secure element 402. In alternative embodiments, the secure element 402 may generate a correspondence table, a hot spots layout, a scrambled keypad image and transmits the scrambled keypad image to the display controller 406 and the hot spots layout to the touch screen controller 408. The touch screen controller 408, having received the hot spots layout and thereby having knowledge of the location and dimensions of the keys defined by the isolated secured area of the processor 404, but not their value, may process the touch event inputs by a user with the hot spots layout to create one or more keying events and encrypt the resulting keying events. The touch screen controller 408 may send the encrypted keying events to the secure element 402. In some embodiments, the touch screen controller 408 is directly connected to the secure element 402. In other embodiments, the touch screen controller 408 may send encrypted keying events to the isolated secured area of the SoC application processor 404, and the isolated secured area 404 may then send the encrypted keying events to the secure element 408. Finally, the secure element 402 may decrypt the encrypted keying events and the encrypted correspondence table to reconstitute a PIC. In some embodiments, the secure element 402 is the only component able to decrypt the encrypted correspondence table and the encrypted keying events. In other embodiments, the secure element 402 is the only component being able to reconstitute a PIC from unencrypted versions of the correspondence table and the keying events. In alternative embodiments, the secure element 402 is the only component having access to an unencrypted version of the PIC. After reconstituting the PIC, the secure element 402 may encrypt the reconstituted PIC, and transmit the encrypted PIC to the isolated secured area 404. In some embodiments, after reconstituting the PIC, the PIC may be combined with other information, prior to encrypting the PIC together with the other information. For example, in the context of financial transactions, the PIN may be combined with a Personal Account Number (PAN) to form a PIN block, as specified by the ISO 9564 standard. After the encrypted PIC is transmitted to the isolated secure area, the isolated secure area may transmit the encrypted PIC, through the Internet or other networks, to the financial institution holding the user's account, possibly through the communications interfaces of the non-secure area of the processor, so that the transaction may be authorized.

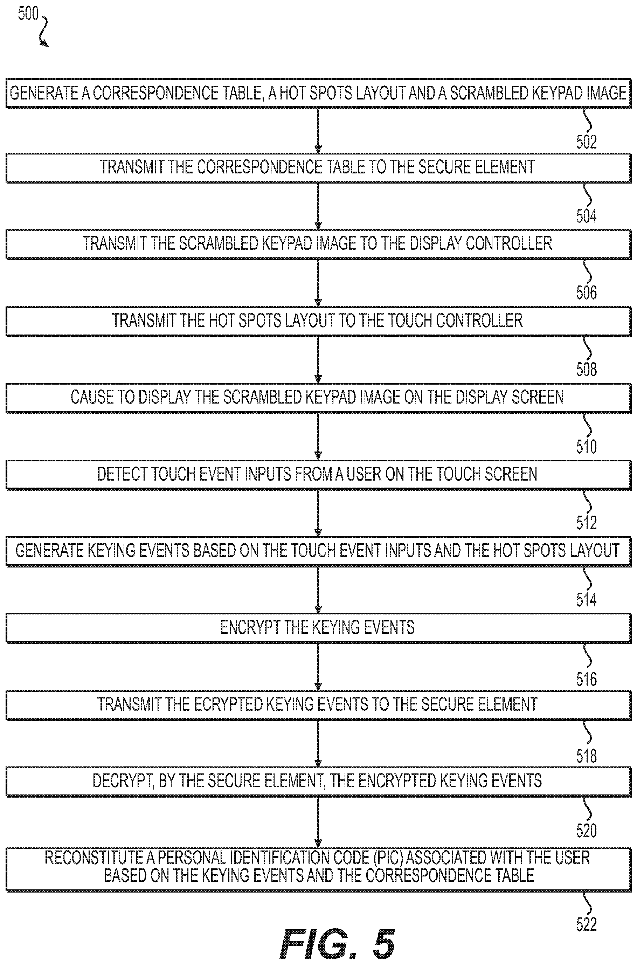

Having described, with reference to FIG. 1 to FIG. 4, some non-limiting example instances of systems and computer-implemented methods used in connection with the problem of conducting a transaction using a PIC, we shall now describe general solutions to the problem with reference to FIG. 5.

More specifically, FIG. 5 shows a flowchart illustrating a first computer-implemented method 500 for conducting a secured PIC entry on a device. In some embodiments, the secured PIC entry refers to a secured financial transaction using a mobile device. In some embodiments, the first computer-implemented method 500 may be (completely or partially) implemented on the mobile device 100.

The method 500 starts with a step 502 with the generation of a correspondence table, a hot spots layout and scrambled keypad image, such as but not limited to correspondence table of FIG. 2a, the hot spots layout of FIG. 2b and the scrambled keypad image of FIG. 2c. In some embodiments, the correspondence table, the hot spots layout and the scrambled keypad image may be generated in the isolated secured area of the processor 115. In alternative embodiments the correspondence table, the hot spots layout and the scrambled keypad image may be generated in a secure element 152. In other embodiments, the correspondence table, the hot spots layout and the scrambled keypad image may be generated by an external secure module and securely transmitted to an isolated secured area of the processor 115. In some embodiments, the correspondence table, the hot spots layout and the scrambled keypad image may be generated by an external device or server, encrypted and sent by a communication network to the device. According to alternative embodiments of the present technology, one or more correspondence tables, hot spots layouts and scrambled keypad images may be generated at the same time. According to other embodiments, one or more correspondence tables, hot spots layouts and scrambled keypad images may be generated at different times.

Generally, but non-limitatively, to generate a scrambled keypad, a correspondence table or array is first created, where the size of the array corresponds to the number of keys in the keypad. Each position in the array, from 0 to 9, has for value a random number, such that each number from 0 to 9 appears only once as a value in the array. A scrambled keypad image may then be generated from the correspondence array, where each key position has the corresponding value. A hot spots layout may also be generated, where the location and geometry of the operable keys are defined. In some embodiments, the geometry and the position of the hot spots layout may also be randomized and/or encoded and may be further encrypted. Different methods for generating the correspondence table, the hot spots layout and the scrambled keypad image may be possible, as it would be recognized by someone skilled in the art of the present technology.

The scrambled keypad image may then be integrated in a PIC entry screen, such as the PIC entry screen from FIG. 3. A visual representation of a scrambled keypad may be generated in the form of an image. In another embodiment of the present technology, the scrambled keypad may be generated in the form of a video stream, where each single frame of the video stream contains a part of the keypad, and the rapid succession of frames make the video stream appear as a static image to the human eye. This may add a layer of security by making the process of capturing the scrambled keypad by means of photographing the device or screen capture more bothersome, as no single frame contains enough information to reconstruct the scrambled keypad and thereby gain knowledge of the correspondence table.

Next at step 504, the correspondence table of the scrambled keypad is transmitted to the secure element 152. In some embodiments, the correspondence may be encrypted before being transmitted to the secure element 152

Next at a step 506, the scrambled keypad image is transmitted to a display controller 142. In some embodiments, a plurality of different PIC entry screens comprising different scrambled keypads may be transmitted to the display controller 142. In other embodiments, a TUI 117 may generate the correspondence table, the hot spots layout, the scrambled keypad image and transmit the scrambled keypad image to the display controller 142. In some embodiments, the PIC entry screen may comprise a security indicator. In other embodiments, the scrambled keypad image is transmitted from the secure element to the isolated secured area before being transmitted to the display controller 142. In alternative embodiments, the correspondence table, the hot spots layout and the scrambled keypad image may be generated in the secure element 115, with the secure element 115 directly connected to the display controller 142, and then transmitted to the display controller.

At a step 508, the hot spots layout is transmitted to the touch screen controller. In some embodiments, the hot spots layout is generated in the isolated secured area of the processor and transmitted to the touch screen controller. In other embodiments, the hot spots layout is generated in the secure element, encrypted and transmitted to the touch screen controller.

At a step 510, the display controller 142 causes to display the scrambled keypad image on the display screen 132. The scrambled keypad image may be displayed on any part of the display screen 132. In some embodiments, each key of the scrambled keypad image may be displayed on corresponding physical keys comprising embedded screens. In other embodiments, a security indicator may be displayed at the same time as the scrambled keypad.

At a step 512, the touch screen controller 144 detects one or more touch event inputs on the touch screen 134 from a user. The touch event inputs may be input by a user with her/his fingers, with a stylus/pen, or with anything that may be sensed by the touch screen 134. As a non-limiting example, the touch screen 134 may use projected capacitive (p-cap) technology to sense an input, wherein capacitive sensors detect anything that is conductive or that has a dielectric constant different from air. The capacitive sensors comprise individual electrodes or electrode intersections that are repeatedly and iteratively scanned by a touch screen controller in order to detect changes in capacitance. A precise x-y touch coordinate with a corresponding state (e.g. touch or release) may be determined by interpolating values of capacitance from multiple adjacent electrodes or intersections. In some embodiments, the touch screen 134 may also comprise pressure sensors to detect different levels of pressure. In alternative embodiments, the keypad displayed on screen may be re-scrambled or changed to a different layout by the isolated secured area of the processor 115 after each touch event input, such that a different scrambled keypad appears after each touch input by the user. In an alternative embodiment, a mouse, a trackpad or a touch screen may be connected to the device, and the corresponding events may be processed a touch screen controller or an isolated secured area of the processor.

At a step 514, a touch screen controller 144 generates one or more keying events based on the touch events inputs by the user at step 512. The touch screen controller first processes the analog touch event inputs by the user into digital touch event outputs. The generation of touch event ouputs based on touch event inputs by a user on a touch screen is well known in the art of the present technology. In some embodiments, a z touch coordinate may also be generated if the touch screen 134 comprises a pressure sensor. In alternative embodiments, the touch screen controller 144 may dismiss every gesture that is not a single touch input, such as but not limited to swiping gestures or multi-touch gestures. In some embodiments, multiple touch events outputs may correspond to a single keying event. The touch event output coordinates may be converted into keying events by comparing them with the hot spots layout, wherein a touch event may correspond to a position "2" on the scrambled key pad, because the touch event's output coordinate falls within the limits of the hot spot at position "2".

At a step 516, the touch screen controller 144 encrypts the one or more keying events generated at the step 514. In some embodiments, the one or more keying events may be encrypted using asymmetric cryptography while in other embodiments symmetric cryptography may be used. In some embodiments block ciphers may be used while in other embodiments stream ciphers may be used. In still other embodiments, white-box cryptography may be used. If using asymmetric cryptography, the keying events may be encrypted using a public or a private cryptographic key. Some embodiments may employ the RSA algorithm while other embodiments may employ algorithms based on elliptic curves, the discrete logarithm problem, or other mathematical principles. If using symmetric cryptography, the key is secret and the encryption algorithm may be DES, TDES or AES, or other encryption methods known in the art. In some embodiments, the touch screen controller may encrypt the touch events according to encryption security standards of the financial industry. In some embodiments, the key used may be changed for each transaction, and unique to each device. More specifically, the key may be changed according to the ANSI X9.24 specifications and the Dynamic Unique Key Per Transaction (DUKPT) method.

At a step 518 the touch screen controller 144 transmits the encrypted keying events of the step 516. In some embodiments, the touch screen controller 144 transmits the encrypted keying events to the secure element 152. In other embodiments, the touch screen controller 144 may be directly connected to the secure element 152. In alternative embodiments, the touch screen controller may transmit the encrypted keying events to the isolated secured area of the processor 115, and the encrypted keying events may then be transmitted to the secure element 152 by the isolated secured area of the processor.

Various other orderings of some of the steps in Fig. 5 are possible, as will be readily apparent to someone skilled in the art. For example, in some embodiments, step 504 may be executed after step 506 and/or step 508. In some embodiments, the steps 504 and 518 may be executed at the same time. In other embodiments, the step 504 may be executed after step 518.

At a step 520, the secure element 152 decrypts the encrypted keying events. In some embodiments, the encrypted keying events may be decrypted using a private cryptographic key. In embodiments wherein the correspondence table of the scrambled keypad has been previously encrypted, it is decrypted before, after or at the same time as the encrypted touch events.

At a step 522, the secure element 152 reconstitutes the PIC associated with the user based on the one or more keying events and the correspondence table of the scrambled keypad. In some embodiments, the PIC is reconstituted by executing a function which outputs the PIC by finding the values corresponding to the position of the keying events. By looking into the correspondence table, this function may determine that the keying event corresponding to "2" is associated with a value 5. The function may then determine that a keying event corresponds to a PIC entry of 5. This example is only provided as an illustrative example for reconstituting the PIC, and is one of the possible methods for determining corresponding keying events, as it may be recognized by a person skilled in the art of the present technology.

In some embodiments, the reconstituted PIC is encrypted by the secure element. In some embodiments, the encrypted PIC is transmitted to the isolated secured area of the processor after being encrypted by the secure element. The encrypted PIC may then be sent via a communication network to a remote server to finalize the transaction. In alternative embodiments wherein the correspondence table has been previously encrypted, the encrypted correspondence table of the scrambled keypad and the encrypted keying events may be sent to a remote server before being decrypted and reconstituted to a PIC by the remote server. In alternative embodiments, the user may be prompted to supply an additional method of authentication, including but not limited to biometric data, a second PIC, or any other computer-readable information associated with the user.

The present method and systems may be used in different non-limiting contexts. An exemplary use is during a financial transaction between a client and a merchant, where a mobile device such as a phone or tablet implements the method and system and may be used as a payment terminal by the merchant. The client may tap his card on the device to make a payment, with the card comprising a RFID or NFC chip, the device also comprising a RFID or NFC interface to communicate with the card. The device may present a PIC entry screen with a security indicator associated with the user, and prompt the user to enter his PIC to confirm the transaction. In some embodiments, the client may receive a confirmation of the transaction from the merchant and/or the financial institution holding a relevant account associated with the client.

Another exemplary use is during a peer-to-peer transaction, where a first person possessing a payment card could transfer funds to a second person possessing a mobile device. The first person could tap his or her card on the second person's mobile device, with the card comprising a RFID or NFC chip, the device also comprising a RFID or NFC interface to communicate with the card. The second person may present the device with a PIC entry screen comprising a security indicator associated with the first person, and prompt the first person to enter his PIC to confirm the transaction. The payment could also be made the opposite way, where the fund is transferred from the second person's device to the first person's card, in which case the second person enters his own PIC on his own device.

Another exemplary use is during a transaction between two persons, the two persons having NFC or RFID enabled devices. The two persons could exchange funds by approaching their devices together. Alternatively, the two persons could initiate and perform the transaction at a distance through a communications network. In either case, to confirm the transaction, at least one person may be prompted with a PIC confirmation screen to complete the transaction.

Notably, the features and examples above are not meant to limit the scope of the present disclosure to a single embodiment, as other embodiments are possible by way of interchange of some or all of the described or illustrated elements. Moreover, where certain elements of the present disclosure can be partially or fully implemented using known components, only those portions of such known components that are necessary for an understanding of the present disclosure are described, and detailed descriptions of other portions of such known components are omitted so as not to obscure the disclosure. In the present specification, an embodiment showing a singular component should not necessarily be limited to other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present disclosure encompasses present and future known equivalents to the known components referred to herein by way of illustration.

The foregoing description of the specific embodiments so fully reveals the general nature of the disclosure that others can, by applying knowledge within the skill of the relevant art(s) (including the contents of the documents cited and incorporated by reference herein), readily modify and/or adapt for various applications such specific embodiments, without undue experimentation, and without departing from the general concept of the present disclosure. Such adaptations and modifications are therefore intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance presented herein, in combination with the knowledge of one skilled in the relevant art(s).

While the above-described implementations have been described and shown with reference to particular steps performed in a particular order, it will be understood that these steps may be combined, sub-divided, or re-ordered without departing from the teachings of the present technology. The steps may be executed in parallel or in series. Accordingly, the order and grouping of the steps is not a limitation of the present technology.

While various embodiments of the present disclosure have been described above, it should be understood that they have been presented by way of example, and not limitations. It would be apparent to one skilled in the relevant art(s) that various changes in form and detail could be made therein without departing from the scope of the disclosure. Thus, the present disclosure should not be limited by any of the above-described exemplary embodiments, but should be defined only in accordance with the following claims.

## Claims

1. A method for operating a device (100), the device (100) comprising a processor (114), the processor (114) comprising an isolated secured area (115), a display screen (130) operatively connected to a display screen controller (142), the display screen controller (142) operatively connected to the processor (114), a touch screen (134) operatively connected to a touch screen controller (144), the touch screen controller (144) operatively connected to the processor (114), and a secure element (152) associated with the processor (114), the method comprising:
generating a correspondence table, a hot spots layout and a visual representation of a scrambled keypad, the correspondence table associating positions of keys on the scrambled keypad and values, the hot spots layout defining geometries and locations of the positions of the keys on the scrambled keypad to be pressed on the touch screen (134), the visual representation of the scrambled keypad comprising the values;
transmitting, to the secure element (152), the correspondence table;
transmitting, to the display controller (142), the visual representation of the scrambled keypad;
transmitting, to the touch screen controller (144), the hot spots layout;
causing to display, by the display controller (142), the visual representation of the scrambled keypad on the display screen (130);
detecting, by the touch screen controller (144), a touch event input from a user on the touch screen (134);
generating, by the touch screen controller (144), a keying event based on the touch event input and the hot spots layout, the keying event identifying the corresponding key on the scrambled keypad pressed by the user on the touch screen (134);
encrypting, by the touch screen controller (144), the keying event;
transmitting, to the secure element (152), the encrypted keying event;
decrypting, by the secure element (152), the encrypted keying event; and
reconstituting, by the secure element (152), a personal identification code (PIC) associated with the user based on the keying event and the correspondence table by retrieving the value from the correspondence table corresponding to the keying event.

2. The method of claim 1, further comprising, prior to transmitting, to the secure element (152), the correspondence table, encrypting the correspondence table.

3. The method of claim 2, further comprising, after encrypting the correspondence table, decrypting, by the secure element (152), the correspondence table.

4. The method of any of claims 1 to 3, wherein the isolated secured area (115) of the processor (114) comprises a trusted user interface (117).

5. The method of any of claims 1 to 4, wherein the method further comprises re-scrambling at least a portion of the visual representation of the scrambled keypad by modifying the correspondence table after a keying event occurs.

6. The method of any of claims 1 to 5, wherein multiple correspondence tables, hot spots layouts and visual representations of scrambled keypads are generated before a touch event occurs.

7. The method of any of claims 1 to 6, wherein the visual representation of the scrambled keypad is at least one of an image and a video stream.

8. The method of any of claims 1 to 7, wherein the method further comprises causing to display, by the display controller (142), a security indicator previously associated with the user.

9. The method of claim 8, wherein the security indicator previously associated with the user is stored in the isolated secure area (115) of the processor (114).

10. The method of any of claims 1 to 9, further comprising:
encrypting the reconstituted PIC by the secure element (152); and
transmitting the encrypted reconstituted PIC to the processor (114).

11. The method of any of claims 1 to 10, wherein the secure element (152) is at least one of a hardware element operatively connected to the processor (114), a software component run by the processor (114), the isolated secured area (115) and a portion of the isolated secured area (115).

12. A computer-implemented system for authenticating a user, the system comprising:
a processor (114);
an isolated secured area (115) associated with the processor (114);
a non-transitory computer-readable medium (112) operatively connected to the processor (114);
a display screen (130) operatively connected to a display screen controller (142);
the display screen controller (142) operatively connected to the processor (114);
a touch screen (134) operatively connected to a touch screen controller (144);
the touch screen controller (144) operatively connected to the processor (114);
a secure element (152) associated with the processor (114);
the processor (114) being configured to cause:
generating a correspondence table, a hot spots layout and a visual representation of a scrambled keypad, the correspondence table associating positions of keys on the scrambled keypad and values, the hot spots layout defining geometries and locations of the positions of the keys on the scrambled keypad to be pressed on the touch screen (134), the visual representation of the scrambled keypad comprising the values;
transmitting, to the secure element (152), the correspondence table;
transmitting, to the display controller (142), the visual representation of the scrambled keypad;
transmitting, to the touch screen controller (144), the hot spots layout;
causing to display, by the display controller (142), the scrambled keypad on the display screen (130);
detecting, by the touch screen controller (144), a touch event input from the user on the touch screen (134);
generating, by the touch screen controller (144), a keying event based on the touch event input and the hot spots layout, the keying event identifying the corresponding key on the scrambled keypad pressed by the user on the touch screen (134);
encrypting, by the touch screen controller (144), the keying event;
transmitting, to the secure element (152), the encrypted keying event;
decrypting, by the secure element (152), the encrypted keying event; and
reconstituting, by the secure element (152), a personal identification code (PIC) associated with the user based on the keying event and the correspondence table by retrieving the value from the correspondence table corresponding to the keying event.

13. The system of claim 12, wherein the isolated secured area (115) is hosted on a second processor, different from the processor (114).

14. The system of any of claims 12 and 13, wherein the secure element (152) is at least one of a hardware element operatively connected to the processor (114), a software component run by the processor (114), the isolated secured area (115) and a portion of the isolated secured area (115).

## Patentansprüche

1. Verfahren zum Betreiben einer Vorrichtung (100), wobei die Vorrichtung (100) einen Prozessor (114), wobei der Prozessor (114) einen isolierten gesicherten Bereich (115) umfasst, einen Anzeigebildschirm (130), der mit einer Anzeigebildschirmsteuerung (142) wirkverbunden ist, wobei die Anzeigebildschirmsteuerung (142) mit dem Prozessor (114) wirkverbunden ist, einen Touchscreen (134), der mit einer Touchscreensteuerung (144) wirkverbunden ist, wobei die Touchscreensteuerung (144) mit dem Prozessor (114) wirkverbunden ist, und ein Sicherungselement (152), das mit dem Prozessor (114) assoziiert ist, umfasst, wobei das Verfahren Folgendes umfasst:
Erzeugen einer Entsprechungstabelle, eines Hotspot-Layouts und einer visuellen Darstellung einer chiffrierten Tastatur, wobei die Entsprechungstabelle Positionen von Tasten auf der chiffrierten Tastatur und Werte assoziiert, wobei das Hotspot-Layout Geometrien und Orte der Positionen der Tasten auf der chiffrierten Tastatur, die auf dem Touchscreen (134) gedrückt werden sollen, definiert, wobei die visuelle Darstellung der chiffrierten Tastatur die Werte umfasst;
Übertragen der Entsprechungstabelle an das Sicherungselement (152);
Übertragen der visuellen Darstellung der chiffrierten Tastatur an die Anzeigesteuerung (142);
Übertragen des Hotspot-Layouts an die Touchscreensteuerung (144);
Bewirken des Anzeigens der visuellen Darstellung der chiffrierten Tastatur auf dem Anzeigebildschirm (130) durch die Anzeigesteuerung (142);
Erfassen durch die Touchscreensteuerung (144) einer Berührungsereigniseingabe von einem Benutzer auf dem Touchscreen (134);
Erzeugen durch die Touchscreensteuerung (144) eines Tasteneingabeereignisses auf Grundlage der Berührungsereigniseingabe und des Hotspot-Layouts, wobei das Tasteneingabeereignis die entsprechende Taste auf der chiffrierten Tastatur, die von dem Benutzer auf dem Touchscreen (134) gedrückt wird, identifiziert;
Verschlüsseln des Tasteneingabeereignisses durch die Touchscreensteuerung (144);
Übertagen des verschlüsselten Tasteneingabeereignisses an das Sicherungselement (152);
Entschlüsseln des verschlüsselten Tasteneingabeereignisses durch das Sicherungselement (152); und
Wiederherstellen durch das Sicherungselement (152) eines persönlichen Identifikationscodes (PIC), der mit dem Benutzer assoziiert ist, auf Grundlage des Tasteneingabeereignisses und der Entsprechungstabelle durch ein Abrufen des Werts aus der Entsprechungstabelle, der dem Tasteneingabeereignis entspricht.

2. Verfahren nach Anspruch 1, ferner umfassend ein Verschlüsseln der Entsprechungstabelle vor dem Übertragen der Entsprechungstabelle an das Sicherungselement (152).

3. Verfahren nach Anspruch 2, ferner umfassend ein Entschlüsseln der Entsprechungstabelle durch das Sicherungselement (152) nach dem Verschlüsseln der Entsprechungstabelle.

4. Verfahren nach einem der Ansprüche 1 bis 3, wobei der isolierte gesicherte Bereich (115) des Prozessors (114) eine vertrauenswürde Benutzerschnittstelle (117) umfasst.

5. Verfahren nach einem der Ansprüche 1 bis 4, wobei das Verfahren ferner ein erneutes Chiffrieren von mindestens einem Teil der visuellen Darstellung der chiffrierten Tastatur durch ein Modifizieren der Entsprechungstabelle, nachdem ein Tasteneingabeereignis erfolgt, umfasst.

6. Verfahren nach einem der Ansprüche 1 bis 5, wobei mehrere Entsprechungstabellen, Hotspot-Layouts und visuelle Darstellungen von chiffrierten Tastaturen erzeugt werden, bevor ein Berührungseingabeereignis erfolgt.

7. Verfahren nach einem der Ansprüche 1 bis 6, wobei es sich bei der visuellen Darstellung der chiffrierten Tastatur um mindestens eines von einem Bild und einem Videostream handelt.

8. Verfahren nach einem der Ansprüche 1 bis 7, wobei das Verfahren ferner ein Bewirken eines Anzeigens eines Sicherheitsindikators, der vorher mit dem Benutzer assoziiert worden ist, durch die Anzeigensteuerung (142) umfasst.

9. Verfahren nach Anspruch 8, wobei der Sicherheitsindikator, der vorher mit dem Benutzer assoziiert worden ist, in dem isolierten sicheren Bereich (115) des Prozessors (114) gespeichert ist.

10. Verfahren nach einem der Ansprüche 1 bis 9, ferner umfassend:
Verschlüsseln des wiederhergestellten PIC durch das Sicherungselement (152); und
Übertragen des verschlüsselten wiederhergestellten PIC an den Prozessor (114).

11. Verfahren nach einem der Ansprüche 1 bis 10, wobei es sich bei dem Sicherungselement (152) um mindestens eines von einem Hardwareelement, das mit dem Prozessor (114) wirkverbunden ist, einer Softwarekomponente, die der Prozessor (114) ausführt, dem isolierten gesicherten Bereich (115) und einem Teil des isolierten gesicherten Bereichs (115) handelt.

12. Computerimplementiertes System zum Authentifizieren eines Benutzers, wobei das System Folgendes umfasst:
einen Prozessor (114);
einen isolierten gesicherten Bereich (115), der mit dem Prozessor (114) assoziiert ist;
ein nichtflüchtiges computerlesbares Medium (112), das mit dem Prozessor (114) wirkverbunden ist;
einen Anzeigebildschirm (130), der mit einer Anzeigebildschirmsteuerung (142) wirkverbunden ist;
wobei die Anzeigebildschirmsteuerung (142) mit dem Prozessor (114) wirkverbunden ist;
einen Touchscreen (134), der mit einer Touchscreensteuerung (144) wirkverbunden ist;
wobei die Touchscreensteuerung (144) mit dem Prozessor (114) wirkverbunden ist;
ein Sicherungselement (152), das mit dem Prozessor (114) assoziiert ist;
wobei der Prozessor (114) dazu konfiguriert ist, Folgendes zu bewirken:
Erzeugen einer Entsprechungstabelle, eines Hotspot-Layouts und einer visuellen Darstellung einer chiffrierten Tastatur, wobei die Entsprechungstabelle Positionen von Tasten auf der chiffrierten Tastatur und Werte assoziiert, wobei das Hotspot-Layout Geometrien und Orte der Positionen der Tasten auf der chiffrierten Tastatur, die auf dem Touchscreen (134) gedrückt werden sollen, definiert, wobei die visuelle Darstellung der chiffrierten Tastatur die Werte umfasst;
Übertragen der Entsprechungstabelle an das Sicherungselement (152);
Übertragen der visuellen Darstellung der chiffrierten Tastatur an die Anzeigesteuerung (142);
Übertragen des Hotspot-Layouts an die Touchscreensteuerung (144);
Bewirken des Anzeigens der visuellen Darstellung der chiffrierten Tastatur auf dem Anzeigebildschirm (130) durch die Anzeigesteuerung (142);
Erfassen durch die Touchscreensteuerung (144) einer Berührungsereigniseingabe von einem Benutzer auf dem Touchscreen (134);
Erzeugen durch die Touchscreensteuerung (144) eines Tasteneingabeereignisses auf Grundlage der Berührungsereigniseingabe und des Hotspot-Layouts, wobei das Tasteneingabeereignis die entsprechende Taste auf der chiffrierten Tastatur, die von dem Benutzer auf dem Touchscreen (134) gedrückt wird, identifiziert;
Verschlüsseln des Tasteneingabeereignisses durch die Touchscreensteuerung (144);
Übertagen des verschlüsselten Tasteneingabeereignisses an das Sicherungselement (152);
Entschlüsseln des verschlüsselten Tasteneingabeereignisses durch das Sicherungselement (152); und
Wiederherstellen durch das Sicherungselement (152) eines persönlichen Identifikationscodes (PIC), der mit dem Benutzer assoziiert ist, auf Grundlage des Tasteneingabeereignisses und der Entsprechungstabelle durch ein Abrufen des Werts aus der Entsprechungstabelle, der dem Tasteneingabeereignis entspricht.

13. System nach Anspruch 12, wobei der isolierte gesicherte Bereich (115) auf einem zweiten Prozessor gehostet wird, der sich von dem ersten Prozessor (114) unterscheidet.

14. System nach einem der Ansprüche 12 und 13, wobei es sich bei dem Sicherungselement (152) um mindestens eines von einem Hardwareelement, das mit dem Prozessor (114) wirkverbunden ist, einer Softwarekomponente, die der Prozessor (114) ausführt, dem isolieren gesicherten Bereich (115) und einem Teil des isolierten gesicherten Bereichs (115) handelt.

## Revendications

1. Procédé de fonctionnement d'un dispositif (100), le dispositif (100) comprenant un processeur (114), le processeur (114) comprenant une zone sécurisée isolée (115), un écran d'affichage (130) connecté de manière opérationnelle à un dispositif de commande d'écran d'affichage (142), le dispositif de commande d'écran d'affichage (142) connecté de manière opérationnelle au processeur (114), un écran tactile (134) connecté de manière opérationnelle à un dispositif de commande d'écran tactile (144), le dispositif de commande d'écran tactile (144) connecté de manière opérationnelle au processeur (114), et un élément sécurisé (152) associé au processeur (114), le procédé comprenant :
la génération d'une table de correspondance, d'une disposition des zones tactiles et d'une représentation visuelle d'un clavier crypté, la table de correspondance associant des positions de touches sur le clavier crypté et des valeurs, la disposition des zones tactiles définissant des géométries et des emplacements des positions des touches sur le clavier crypté sur lesquelles appuyer sur l'écran tactile (134), la représentation visuelle du clavier crypté comprenant les valeurs ;
la transmission, à l'élément sécurisé (152), de la table de correspondance ;
la transmission, au dispositif de commande d'affichage (142), de la représentation visuelle du clavier crypté ;
la transmission, au dispositif de commande d'écran tactile (144), de la disposition des zones tactiles ;
l'entraînement de l'affichage, par le dispositif de commande d'affichage (142), de la représentation visuelle du clavier crypté sur l'écran d'affichage (130) ;
la détection, par le dispositif de commande d'écran tactile (144), d'une entrée d'événement tactile d'un utilisateur sur l'écran tactile (134) ;
la génération, par le dispositif de commande d'écran tactile (144), d'un événement de saisie basé sur l'entrée d'événement tactile et la disposition des zones tactiles, l'événement de saisie identifiant la touche correspondante sur le clavier crypté appuyée par l'utilisateur sur l'écran tactile (134) ;
le cryptage, par le dispositif de commande d'écran tactile (144), de l'événement de saisie ;
la transmission, à l'élément sécurisé (152), de l'événement de saisie crypté ;
le décryptage, par l'élément sécurisé (152), de l'événement de saisie crypté ; et
la reconstitution, par l'élément sécurisé (152), d'un code d'identification personnel (PIC) associé à l'utilisateur basé sur l'événement de saisie et la table de correspondance en récupérant la valeur de la table de correspondance correspondant à l'événement de saisie.

2. Procédé selon la revendication 1, comprenant en outre, avant la transmission, à l'élément sécurisé (152), de la table de correspondance, le cryptage de la table de correspondance.

3. Procédé selon la revendication 2, comprenant en outre, après le cryptage de la table de correspondance, le décryptage, par l'élément sécurisé (152), de la table de correspondance.

4. Procédé selon l'une quelconque des revendications 1 à 3, dans lequel la zone sécurisée isolée (115) du processeur (114) comprend une interface utilisateur fiable (117).

5. Procédé selon l'une quelconque des revendications 1 à 4, dans lequel le procédé comprend en outre le recryptage d'au moins une partie de la représentation visuelle du clavier crypté en modifiant la table de correspondance après la survenue d'un événement de saisie.

6. Procédé selon l'une quelconque des revendications 1 à 5, dans lequel plusieurs tables de correspondance, dispositions de zones tactiles et représentations visuelles de claviers cryptés sont générées avant la survenue d'un événement tactile.

7. Procédé selon l'une quelconque des revendications 1 à 6, dans lequel la représentation visuelle du clavier crypté est au moins l'une d'une image et d'un flux vidéo.

8. Procédé selon l'une quelconque des revendications 1 à 7, dans lequel le procédé comprend en outre l'entraînement de l'affichage, par le dispositif de commande d'affichage (142), d'un indicateur de sécurité précédemment associé à l'utilisateur.

9. Procédé selon la revendication 8, dans lequel l'indicateur de sécurité précédemment associé à l'utilisateur est stocké dans la zone sécurisée isolée (115) du processeur (114).

10. Procédé selon l'une quelconque des revendications 1 à 9, comprenant en outre :
le cryptage du PIC reconstitué par l'élément sécurisé (152) ; et
la transmission du PIC reconstitué crypté au processeur (114).

11. Procédé selon l'une quelconque des revendications 1 à 10, dans lequel l'élément sécurisé (152) est au moins l'un parmi un élément matériel connecté de manière opérationnelle au processeur (114), un composant logiciel exécuté par le processeur (114), la zone sécurisée isolée (115) et une partie de la zone sécurisée isolée (115) .

12. Système informatisé pour authentifier un utilisateur, le système comprenant :
un processeur (114) ;
une zone sécurisée isolée (115) associée au processeur (114) ; un support non transitoire lisible par ordinateur (112) connecté de manière opérationnelle au processeur (114) ;
un écran d'affichage (130) connecté de manière opérationnelle à un dispositif de commande d'écran d'affichage (142) ;
le dispositif de commande d'écran d'affichage (142) connecté de manière opérationnelle au processeur (114) ;
un écran tactile (134) connecté de manière opérationnelle à un dispositif de commande d'écran tactile (144) ;
le dispositif de commande d'écran tactile (144) connecté de manière opérationnelle au processeur (114) ;
un élément sécurisé (152) associé au processeur (114) ;
le processeur (114) étant configuré pour entraîner :
la génération d'une table de correspondance, d'une disposition des zones tactiles et d'une représentation visuelle d'un clavier crypté, la table de correspondance associant des positions de touches sur le clavier crypté et des valeurs, la disposition des zones tactiles définissant des géométries et des emplacements des positions des touches sur le clavier crypté sur lesquelles appuyer sur l'écran tactile (134), la représentation visuelle du clavier crypté comprenant les valeurs ;
la transmission, à l'élément sécurisé (152), de la table de correspondance ;
la transmission, au dispositif de commande d'affichage (142), de la représentation visuelle du clavier crypté ;
la transmission, au dispositif de commande d'écran tactile (144), de la disposition des zones tactiles ;
l'entraînement de l'affichage, par le dispositif de commande d'affichage (142), du clavier crypté sur l'écran d'affichage (130) ;
la détection, par le dispositif de commande d'écran tactile (144), d'une entrée d'événement tactile de l'utilisateur sur l'écran tactile (134) ;
la génération, par le dispositif de commande d'écran tactile (144), d'un événement de saisie basé sur l'entrée d'événement tactile et la disposition des zones tactiles, l'événement de saisie identifiant la touche correspondante sur le clavier crypté appuyée par l'utilisateur sur l'écran tactile (134) ;
le cryptage, par le dispositif de commande d'écran tactile (144), de l'événement de saisie ;
la transmission, à l'élément sécurisé (152), de l'événement de saisie crypté ;
le décryptage, par l'élément sécurisé (152), de l'événement de saisie crypté ; et
la reconstitution, par l'élément sécurisé (152), d'un code d'identification personnel (PIC) associé à l'utilisateur basé sur l'événement de saisie et la table de correspondance en récupérant la valeur de la table de correspondance correspondant à l'événement de saisie.

13. Système selon la revendication 12, dans lequel la zone sécurisée isolée (115) est hébergée sur un second processeur, différent du processeur (114).

14. Système selon l'une quelconque des revendications 12 et 13, dans lequel l'élément sécurisé (152) est au moins l'un parmi un élément matériel connecté de manière opérationnelle au processeur (114), un composant logiciel exécuté par le processeur (114), la zone sécurisée isolée (115) et une partie de la zone sécurisée isolée (115).
